# EUROPÄISCHE PATENTSCHRIFT

(11) **EP 1 655 328 B1**
(45) Veröffentlichungstag und Bekanntmachung des Hinweises auf die Patenterteilung: **19.12.2007**
(21) Anmeldenummer: 05022907.9
(22) Anmeldetag: 20.10.2005
(51) Int. Cl.: C08K 3/22, C08L 83/04, A23G 1/22

(54) **Mikrowellenaktive Silikonzusammensetzungen und daraus hergestellte Formkörper**
Microwave acitve silicone compositions and molded articles made thereof
Compositions de silicone activable à micro-ondes et articles moulés fabriqués à partir de celles-ci

(30) Priorität: 04.11.2004 DE 102004053310
(43) Veröffentlichungstag der Anmeldung: 10.05.2006
(73) Patentinhaber: Wacker Chemie AG, 81737 München (DE)
(72) Erfinder: Weidinger, Jürgen, Dr., 84570 Polling (DE)
(74) Vertreter: Renner, Thomas

(56) Entgegenhaltungen:
- US-A- 4 980 384

## Beschreibung

Die Erfindung betrifft mit Magnetite oder mit Gemischen enthaltend Magnetit gefüllte Siliconelastomere mit mikrowellenaktiven, magnetischen oder mikrowellenaktiven und magnetischen Eigenschaften, Verfahren zu deren Herstellung sowie die Verwendung der erfindungsgemäßen Massen zur Herstellung von Extrudaten und Formkörpern nach Vernetzung.

Siliconelastomere sind aufgrund ihrer chemischen Struktur, beispielsweise durch ihr fehlendes Dipolmoment, nicht mikrowellenaktiv. Daher sind sie durch Mikrowellenstrahlung weder heizbar noch vernetzbar. Auch ihre Vulkanisierung durch Einstrahlung von Mikrowellenenergie konnte daher noch nicht beschrieben werden.

Siliconelastomere mit mikrowellenaktiven Füllstoffen aus der Gruppe der Ferrite, ein oxidische Werkstoffe mit der Formel MₓFe_{y}O_{z}, wurden im Stand der Technik bereits für einige Anwendungen beschrieben. Beispielsweise werden mit Ferriten gefüllte Siliconelastomere zum Zweck der Strahlenabsorption oder Dämpfung in den Patentschriften US 6,521,150 B1, EP 0 945 916 A2 und DE 37 21 427 A1, zur mikrowelleninduzierten Vulkanisation in den Patentschriften US 4,980,384 B1 und US 4,460,713 B1 sowie zum Erhitzen oder zum Trocknen durch Aufheizen von Gegenständen durch den direkten Kontakt mit einem ferritgefüllten Silicon oder damit beschichteten Träger in den Patentschriften EP 1 132 000 A1, DE 196 46 695 A1, EP 0 736 251 A1, FR 2694876 A1, US 4,496,815 B1, US 4,566,804 B1 beschrieben.

Ferrite bilden eine Gruppe von oxidkeramischen Werkstoffen der allgemeinen Formel (I)

M^{II}Fe^{III}₂O₄ (I)

entsprechend M^{II}O · Fe₂O₃, die permanente magnetische Dipole enthalten. Ferritspinelle, wobei M^{II} ein zweiwertiges Metalle, wie beispielsweise Zink, Cadmium, Cobalt, Mangan, Eisen, Kupfer oder Magnesium bedeutet, kommen in Molverhältnissen von 1 Fe₂O₃ : 1 M^{II}O (beispielsweise Magnetit, Fe₃O₄) bis 3 Fe₂O₃ : 2 M^{II}O und mit gemischten M^{II}-Komponenten, beispielsweise Ni_{0,5}Zn_{0,5}Fe₂O₄, vor.

Die meist durch Sinterung der gemischten pulverisierten Oxid-Komponenten bei 1.000 - 1.450°C herstellbaren Ferrite verfügen über gute magnetische Eigenschaften, wobei man paramagnetische Ferrite, in denen M^{II} beispielsweise Zink oder Cadmium bedeutet, und ferromagnetische Ferrite, in denen M^{II} beispielsweise Mangan, Cobalt oder Nickel bedeutet, unterscheiden kann.

Magnetit ist ein Spezialfall der Ferrite der allgemeinen Formel (II)

Fe²⁺Fe₂³⁺O₄ (II)

entsprechend FeO · Fe₂O₃, vereinfacht Fe₃O₄, und weist eine Struktur eines inversen Spinells mit kristallinem kubischhexakisoktaedrischem Kristallgitter auf. Die Struktur kann Fehlordnungen aufweisen oder es können alle Gitterplätze gemäß der Formel besetzt sein. Magnetit bildet eisenschwarze, stumpf metallisch glänzende und undurchsichtige Kristalle. Magnetit ist stark ferromagnetisch und weist oberhalb von etwa 115 bis 120 K gute elektrische Leitfähigkeit auf. Natürliches Magnetit weist häufig Verwachsungen mit Ulvöspinell Fe₂TiO₄ (Titanomagnetit mit bis 6% TiO₂) und Ilmenit auf. Der theoretische Eisen-Gehalt von 72,4% wird im Allgemeinen nicht erreicht, da Magnetit meist noch Magnesium, Aluminium (Mischkristallbildung mit Spinell), Nickel, Zink, Chrom, Titan und bis über 1,5 Gew.-% Vanadiumoxid enthält. Es gibt allerdings auch dem Fachmann bekannte Magnetite natürlichen sowie industriellen Ursprungs, welche schwerere Metalle nur in ubiquitären Mengen aufweisen und daher nahezu den theoretisch möglichen Eisenanteil aufweisen. Im Nachfolgenden wird mit "Ferrite" die Gruppe der Ferrite ohne den Spezialfall des Magnetits bezeichnet.

Die im Stand der Technik beschriebenen mit Ferriten gefüllten Siliconmassen haben unterschiedliche Nachteile. Ferrite weisen aufgrund ihrer chemischen Entstehungsgeschichte vor allem für Lebensmittelanwendungen kritische Anteile an Verunreinigungen, wie beispielsweise Schwermetalle, auf, welche meist nicht für den direkten Kontakt mit Lebensmitteln zugelassen sind und daher zu aufwändigen Herstellungsverfahren des Endteils, beispielsweise in Form eines mehrschichtigen Aufbaus, zwingen. Da Ferrite eine ausreichende Aktivität nur in bestimmten Frequenzbändern der Mikrowellenstrahlung aufweisen, sind sie nur eingeschränkt verwendbar. Beispielsweise durch die Abnahme oder den Zusammenbruch der Aktivität beim Tempern oder beim Heizen bzw. durch Umwandlung oder Zersetzung ist die Dauerbeständigkeit der entsprechenden Ferritmodifikationen ungenügend. Zudem sind die Füllstoffe des Stands der Technik nur beschränkt in die Elastomermatrix einmischbar. Häufig kommt es zusätzlich zu einer Verschlechterung der Verarbeitbarkeit der Massen durch den Füllstoff, da diese beispielsweise eine erhöhte Klebrigkeit oder Abrasivität erzeugen. Insgesamt zeigen die Siliconkautschukzusammensetzungen gemäß dem Stand der Technik häufig eine Verschlechterung der mechanischen Eigenschaften der Vulkanisate. Weiterhin weisen die Füllstoffe gemäß dem diesbezüglichen Stand der Technik eine verschlechterte Behandelbarkeit der Oberfläche auf, was wiederum deren Aufnahme und Anbindung in die Polymermatrix vermindert. Zudem ist der optische Aspekt der im Stand der Technik beschriebenen hell- bis dunkelbraunen Ferrite nicht abänderbar und nicht ansprechend, vor allem für Anwendungen in sichtbaren Bereichen.

Es bestand daher die Aufgabe, siliconhaltige Zusammensetzungen zur Verfügung zu stellen, die ohne die oben beschriebenen Nachteile eine Herstellung und Verwendung mikrowellenaktiver, magnetischer oder mikrowellenaktiver und magnetischer Vulkanisate ermöglichen.

Die Aufgabe konnte überraschenderweise dadurch gelöst werden, dass Magnetit als Füllstoff ausschließlich oder in Verbindung mit weiteren Füllstoffen, wie beispielsweise Ferriten, in unbehandelter und insbesondere behandelter Form, verwendet werden. Die Einbettung von Magnetit in Duromere, wie beispielsweise in der Patentschrift US 4,542,271 beschrieben, oder hochhitzebeständige Elastomere, wie beispielsweise FluorKautschuke (FKM, FPM) oder Polyfluorsilicone (FVMQ), ist möglich, jedoch verliert man in ersterem Fall an mechanischer Performance und Flexibilität, gegebenenfalls auch an Lebensmittelkonformität, im letzteren Fall an Ökonomie und Lebensmitteleignung der Produkte. Zudem ist meist eine aufwändige Ver- oder Einarbeitung damit verbunden. Die Einbettung in Thermoplaste oder wenig hitzebeständige Elastomere verbietet sich aufgrund der Hitzeentwicklung bei Mikrowelleneinwirkung von selbst.

Gegenstand der vorliegenden Erfindung sind daher vernetzbare Siliconzusammensetzungen enthaltend:
(A) Organopolysiloxane mit mindestens einem organischen Rest aufweisend zumindest eine aliphatische Kohlenstoff-Kohlenstoff-Mehrfachbindung,
(B) 0 bis 100 Gewichtsteile bezogen auf 100 Gewichtsteile des Organopolysiloxans (A) behandelte oder unbehandelte aktive Füllstoffe, bevorzugt pyrogene oder gefällte Kieselsäuren,
(C) behandelte oder unbehandelte oder Gemische von behandelten oder unbehandelten mikrowellenaktive Füllstoffen enthaltend Magnetit der allgemeinen Formel Fe₃O₄ und
(D) ein zur Vernetzung geeignetes System ausgewählt aus der Gruppe der Edelmetallkomplex-katalysierten Additionsvernetzungssyteme.

Bei den erfindungsgemäßen Siliconzusammensetzungen kann es sich um Einkomponenten-Massen wie auch um Mehrkomponenten-Massen handeln. In letzterem Fall können die Komponenten der erfindungsgemäßen Massen alle Bestandteile in beliebiger Kombination enthalten.

Vorzugsweise enthalten die erfindungsgemäßen siliconhaltigen Massen als Bestandteil (A) eine aliphatisch ungesättigte Organosiliciumverbindung, wobei alle bisher in unvernetzten und vernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Das Molekulargewicht des Bestandteils (A) beträgt vorzugsweise 10² bis 10⁶ g/mol. In einer bevorzugten Ausführungsform handelt sich bei dem Bestandteil (A) um ein relativ niedermolekulares alkenylfunktionelles Oligosiloxan, wie beispielsweise 1,2-Divinyltetramethyldisiloxan. In einer weiteren bevorzugten Ausführungsform werden über kettenständige oder endständige Sigebundene Vinylgruppen verfügende hochpolymere Polydimethylsiloxane, beispielsweise mit einem Molekulargewicht von 10⁴ bis 10⁶ g/mol als mittels NMR bestimmtes Zahlenmittel verwendet. Die Struktur der den Bestandteil (A) bildenden Moleküle ist nicht von ausschlaggebender Bedeutung; insbesondere kann die Struktur eines oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle oder tetrafunktionelle Einheiten oder beide Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Füllstoffe (B) können alle Füllstoffe aus der Gruppe der Silikate eingesetzt werden, die auch bisher in siliconhaltigen Massen eingesetzt worden sind. Beispiele für verstärkende Füllstoffe, die als Komponente (B) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (B) liegt im Bereich von 0 bis 70 Gew.-%, vorzugsweise bei 0 bis 50 Gew.-%.

Die erfindungsgemäß eingesetzten Komponenten (A) und (B) sind handelsübliche Produkte bzw. nach in der Chemie gängigen Verfahren herstellbar.

Als mikrowellenaktive Füllstoffe (C) werden bevorzugt Gemische enthaltend Magnetit und gegebenenfalls weitere oxidische Verbindungen von Metallen wie beispielsweise Ferrit, eingesetzt. Die mikrowellenaktiven Füllstoffe (C) werden vorzugsweise in Gewichtsanteilen von 0,1 bis 500 bezogen auf 100 Gewichtsanteile der Komponente (A) zugesetzt. Die mikrowellenaktive Füllstoffe (C) weisen dabei vorzugsweise eine mittlere Korngröße mit beliebiger Korngrößenverteilung von 0,1 bis 1000 µm, besonders bevorzugt zwischen 10 und 500 µm auf.

Zur Verbesserung der Einmischbarkeit und der mechanischen Eigenschaften der Endmischung können diese Füllstoffe mit geeigneten Chemikalien behandelt werden, was beispielsweise in Knetern, Mischern, Dissolvern oder Autoklaven erfolgen kann. Als Agenzien zur Behandlung eignen sich beispielsweise Amine, Alkohole oder Silane. Bevorzugt sind Silane der allgemeinen Zusammensetzung Si[XRₙ]₄, wobei X ein Nichtmetallatom ausgewählt aus der Gruppe enthaltend C, N, O oder P und R einen beliebigen nicht organischen oder organischen Rest bedeutet. Die Verbindung wird so gewählt, dass das Molekül auf die Oberfläche der mikrowellenaktiven Partikel aufzieht und mit diesen eine physikalische oder durch Abspaltung mindestens eines Restes an der Si-X oder der X-R-Bindung eine chemische Verbindung eingeht. Durch die Oberflächenbehandlung mit geeigneten Agenzien wird einerseits eine bessere Dispergierung in der Polymermatrix erreicht, andererseits ist während einer evtl. folgenden Vernetzung auch eine Anbindung durch Vulkanisation möglich.

Die erfindungsgemäß eingesetzten Ausgangsstoffe der oxidischen Metallverbindungen sind dem Fachmann bekannt.

Außer den Komponenten (A) bis (D) können die erfindungsgemäßen Zusammensetzungen noch alle weiteren Stoffe enthalten, die auch bisher zur Herstellung von siliconhaltigen Massen eingesetzt wurden.

Die erfindungsgemäße siliconhaltige Masse kann wahlweise als Bestandteil (E) weitere Zusätze zu einem Anteil von bis zu 70 Gew.-%, vorzugsweise 0,0001 bis 40 Gew.-%, enthalten. Diese Zusätze können beispielsweise inaktive Füllstoffe, harzartige Polyorganosiloxane, die von den Siloxanen (A) verschieden sind, Dispergierhilfsmittel, Lösungsmittel, Haftvermittler, Pigmente, Farbstoffe, Weichmacher, organische Polymere oder Hitzestabilisatoren sein. Hierzu zählen Zusätze, wie beispielsweise Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe oder Pigmente.

Enthalten sein können des weiteren Hilfsmittel (F), die der gezielten Einstellung der Verarbeitungszeit, Anspringtemperatur und Vernetzungsgeschwindigkeit der erfindungsgemäßen Massen dienen, wie etwa Inhibitoren, Katalysatoren und Cokatalysatoren sowie Vernetzer- bzw. Härtermoleküle, wie etwa H-Siloxane, Hydroxysiloxane etc.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den Siliconöle (fluids), einkomponentige, raumtemperatur vernetzende Massen (RTV-1), zweikomponentige, raumtemperatur vernetzende Massen (RTV-2), flüssige Siliconkautschuke (LSR) und hochtemperatur vernetzende Massen (HTV) bezeichneten Massen der Fall sein kann. Hinsichtlich der elastomeren Eigenschaften der vernetzten erfindungsgemäßen Siliconmassen wird gleichfalls das gesamte Spektrum umfasst, beginnend bei extrem weichen Silicongelen, über gummiartige Materialien bis hin zu hochvernetzten Siliconen mit glasartigem Verhalten.

Die Herstellung der erfindungsgemäßen siliconhaltigen Massen kann nach bekannten Verfahren erfolgen, wie beispielsweise durch gleichmäßige Vermischung der einzelnen Komponenten. Die Reihenfolge dabei ist beliebig, vorzuziehen ist jedoch die vorrangige -wenn nötig- Behandlung des mikrowellenaktiven Füllstoffs (C) und seine Vermischung mit der Polymermatrix. Der Füllstoff kann dabei als Feststoff oder als mit geeigneten Agenzien angeteigter Batch zugefügt werden. Die Vermischung erfolgt dabei abhängig von der Viskosität von (A) beispielsweise mit einem Rührer, in einem Disolver, auf einer Walze oder in einem Kneter. Der Füllstoff (C) kann beispielsweise in einem organischen Thermoplasten oder thermoplastischen Siliconharz verkapselt werden.

Bei den erfindungsgemäß eingesetzten Komponenten (A) bis (F) kann es sich jeweils um eine einzelne Art einer solchen Komponente, wie auch um ein Gemisch aus mindestens zwei verschiedenen Arten einer solchen Komponente handeln.

Die erfindungsgemäßen Massen können bei Vorhandensein vernetzbarer Gruppen vernetzt (vulkanisiert) werden, wie die bisher bekannten vernetzbaren Massen. Vorzugsweise handelt es sich dabei um Temperaturen von 40 bis 220°C, besonders bevorzugt von 100 bis 190°C, und drucklos oder unter einem Druck von 900 bis 1100 hPa. Es können aber auch höhere oder niedrigere Temperaturen und Drücke angewendet werden. Die Vernetzung kann auch photochemisch mit energiereicher Strahlung, wie beispielsweise sichtbares Licht mit kurzen Wellenlängen und UV-Licht, oder mit einer Kombination aus thermischer und photochemischer Anregung durchgeführt werden.

Ein zusätzlicher Vorteil der erfindungsgemäßen Massen ist ihre rasche Vernetzbarkeit durch Mikrowellenstrahlung aufgrund des Füllstoffs (C) .

Ein weiterer Gegenstand der vorliegenden Erfindung ist die Verwendung der vernetzten erfindungsgemäßen Massen zur Herstellung von Extrudaten und Formkörpern.

Die erfindungsgemäßen Massen, sofern sie vernetzbar sind, sowie die erfindungsgemäß daraus hergestellten Vernetzungsprodukte können für alle Zwecke eingesetzt werden, mit dem Vorteil der Mikrowellenabsorption, für die auch bisher zu Elastomeren vernetzbare Organopolysiloxanmassen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren, Formgießen und Formpressen, Abformungen oder die Verwendung als Dicht-, Einbett- und Vergussmassen. Besonders bevorzugt sind Formteile und Extrudate, die eine erhöhte Wärmeleitfähigkeit, eine erhöhte Dichte beispielsweise zur Dämmung und Dämpfung bzw. Erhöhung der Wertigkeit, oder eine durch Mikrowellenstrahlung induzierte Heizbarkeit aufweisen müssen, wie beispielsweise Heizplatten, Backformen, Dämmplatten oder Dämpfungselemente, sowie Teile, welche aufgrund ihres magnetischen Moments beispielsweise durch Sensoren detektierbar oder magnetisch anregbar sind.

Die erfindungsgemäßen Massen haben den Vorteil, dass sie in einem einfachen Verfahren unter Verwendung leicht zugänglicher Ausgangsstoffe und damit wirtschaftlich hergestellt werden können.

Die erfindungsgemäßen Massen haben weiterhin den Vorteil, dass sie aufgrund der erhöhten Einmischbarkeit der behandelten schweren Füllstoffe (C) eine Einstellung der Dichte bis auf das Vierfache der Ausgangsdichte der Siliconzusammensetzung ohne den mikrowellenaktiven Füllstoff (C) erlauben, was mit anderen im Elastomerbereich verwendeten Füllstoffen nicht möglich ist.

Die erfindungsgemäßen siliconhaltigen Massen haben zusätzlich den Vorteil, dass durch die Variation des Mischungsverhältnisses von mehreren morphologisch unterschiedlichen mikrowellenaktiven Füllstoffen eine Abdeckung großer Frequenzbänder möglich ist.

Die erfindungsgemäßen Massen haben des weiteren den Vorteil, dass die vernetzten Massen am Elastomer-Endprodukt auch bei hohen Anteilen an mikrowellenaktiven Füllstoffen keine wesentliche Verschlechterung von mechanischen oder anderen physikalischen Eigenschaften im Vergleich zu ungefüllten Massen zeigen. Die Beständigkeit gegenüber Heißluft ist sogar in der Regel verbessert.

Die erfindungsgemäßen Massen haben des weiteren den Vorteil, dass ihre vernetzten Vulkanisate mit ausschließlich Magnetit als mikrowellenaktivem Füllstoff im direkten Kontakt mit Lebensmitteln verwendet werden können, so dass keine aufwändigen zusätzlichen Beschichtungen oder Träger, wie beispielsweise Aluminium, verwendet werden müssen, um direkten Kontakt zu vermeiden. Vulkanisate aus diesen Massen weisen ferner eine ansprechende Optik auf.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

Zur Herstellung einer verbessert wärmeleitfähigen, mikrowellenaktiven vernetzbaren Siliconmasse mit hoher Dichte, welche für den Kontakt mit Lebensmitteln geeignet ist, beispielsweise als Heizelement oder Backform verwendet werden kann, werden in einem Kneter bei Raumtemperatur 100 Teile eines Poly(dimethyl)methylvinylsiloxans vorgelegt. Bei einer Temperatur von 80°C werden portionsweise 2 Teile eines Polydimethylsiloxans und 15 Teile einer hochdispersen Kieselsäure zugegeben und nach jedem Zugabeschritt 10 Minuten geknetet. Anschließend wird nochmals 3 Stunden bei 160°C geknetet und ausgeheizt. Dann werden bei Raumtemperatur portionsweise 300 Teile Magnetit mit einer mittleren Korngröße von 150 µm zugegeben und geknetet. Anschließend werden 3 Teile eines Silazans und 1 Teil Wasser zugegeben und die Mischung bei 70°C für 1 Stunde geknetet. Nach Abkühlen kann die Mischung entnommen und auf der Walze oder im Kneter mit Vulkanisationsadditiven versehen werden. Die Masse der Endhärte am Vulkanisat von 70 IRHD weist eine Dichte von mindestens 3 g/cm³ und eine um den Faktor 2,5 - 3 gegenüber Siliconzusammensetzung ohne Magnetit verbesserte Wärmeleitfähigkeit auf.

### Beispiel 2

Zur Herstellung einer hoch mikrowellenaktiven vernetzbaren Siliconmasse für technische Artikel werden in einem Kneter bei Raumtemperatur 100 Teile eines Poly(dimethyl)methylvinylsiloxans vorgelegt. Bei einer Temperatur von 80°C werden portionsweise 2 Teile eines Polydimethylsiloxans und 15 Teile einer hochdispersen Kieselsäure zugegeben und nach jedem Zugabeschritt 10 Minuten geknetet. Anschließend wird nochmals 3 Stunden bei 160°C geknetet und ausgeheizt. Dann werden bei Raumtemperatur portionsweise 10 Teile Manganoferrit und 50 Teile Magnetit, jeweils mit einer mittleren Korngröße von 50 µm, zugegeben und geknetet. Anschließend werden 2 Teile eines Silazans zugegeben und die Mischung bei 70°C für 1 Stunde geknetet. Nach Abkühlen kann die Mischung entnommen und auf der Walze oder im Kneter mit Vulkanisationsadditiven versehen werden. Die Masse der Endhärte am Vulkanisat von 55 IRHD weist eine Dichte von 2 g/cm³ und eine schnelle Aufheizrate in handelsüblichen Mikrowellengeräten auf. Die schnelle Aufheizrate zeigt sich beispielsweise darin, dass eine Oberflächentemperatur von 200°C nach 30 Sekunden in einer Mikrowellen bei einer Leistung von lediglich 300 Watt erreicht wird.

## Patentansprüche

1. Vernetzbare Siliconzusammensetzungen enthaltend:
(A) Organopolysiloxane mit mindestens einem organischen Rest aufweisend zumindest eine aliphatische Kohlenstoff-Kohlenstoff-Mehrfachbindung,
(B) 0 bis 100 Gewichtsteile bezogen auf 100 Gewichtsteile des Organopolysiloxans (A) behandelte oder unbehandelte aktive Füllstoffe, bevorzugt pyrogene oder gefällte Kieselsäuren,
(C) behandelte oder unbehandelte oder Gemische von behandelten oder unbehandelten mikrowellenaktive Füllstoffen enthaltend Magnetit der allgemeinen Formel Fe₃O₄ und
(D) ein zur Vernetzung geeignetes System ausgewählt aus der Gruppe, der Edelmetallkomplex-katalysierten Additionsvernetzungssyteme.

2. Vernetzbare Siliconzusammensetzungen gemäß Anspruch 1, **dadurch gekennzeichnet, dass** es sich um Einkomponenten-Massen handelt.

3. Vernetzbare Siliconzusammensetzungen gemäß Anspruch 1 oder 2, **dadurch gekennzeichnet, dass** zumindest ein Organopolysiloxan ausgewählt wird aus der Gruppe enthaltend Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

4. Vernetzbare Siliconzusammensetzungen gemäß Anspruch 1 oder 2, **dadurch gekennzeichnet, dass** das Organopolysiloxan ein vinylfunktionelles, im wesentlichen lineares Polydiorganosiloxane mit einer Viskosität von 0,01 bis 500 000 Pa·s bei 25°C ist.

5. Vernetzbare Siliconzusammensetzungen gemäß einem der Ansprüche 1 bis 4, **dadurch gekennzeichnet, dass** der Füllstoff (B) ausgewählt wird aus der Gruppe enthaltend pyrogene oder gefällte Kieselsäuren mit BET-Oberflächen von mindestens 50 m²/g, Ruße und Aktivkohlen.

6. Vernetzbare Siliconzusammensetzungen gemäß einem der Ansprüche 1 bis 5, **dadurch gekennzeichnet, dass** als mikrowellenaktive Füllstoffe (C) 0,1 bis 500 Gewichtsanteilen bezogen auf 100 Gewichtsanteile der Komponente (A) Magnetit oder Gemische enthaltend Magnetit gegebenenfalls enthaltend weitere oxidische Verbindungen von Metallen eingesetzt wird.

7. Vernetzbare Siliconzusammensetzungen gemäß einem der Ansprüche 1 bis 6, **dadurch gekennzeichnet, dass** die mikrowellenaktive Füllstoffe (C) eine mittlere Korngröße mit beliebiger Korngrößenverteilung von 0,1 bis 1000 µm aufweisen.

8. Vernetzbare Siliconzusammensetzungen gemäß einem der Ansprüche 1 bis 7, **dadurch gekennzeichnet, dass** die mikrowellenaktive Füllstoffe (C) mit Aminen, Alkoholen oder Silanen oberflächenbehandelt wurden.

9. Vernetzbare Siliconzusammensetzungen gemäß einem der Ansprüche 1 bis 8, **dadurch gekennzeichnet, dass** die vernetzbaren Siliconzusammensetzungen als weitere Bestandteile Zusätze (E) ausgewählt aus der Gruppe enthaltend inaktive Füllstoffe, harzartige von (A) verschiedene Polyorganosiloxane, Dispergierhilfsmittel, Lösungsmittel, Haftvermittler, Pigmente, Farbstoffe, Weichmacher, organische Polymere und Hitzestabilisatoren enthält.

10. Vernetzbare Siliconzusammensetzungen gemäß einem der Ansprüche 1 bis 9, **dadurch gekennzeichnet, dass** die vernetzbaren Siliconzusammensetzungen als weitere Bestandteile Hilfsmittel (F) ausgewählt aus der Gruppe enthaltend Inhibitoren, Katalysatoren, Cokatalysatoren, Vernetzer, Härter, H-Siloxane und Hydroxysiloxane enthält.

11. Verfahren zur Herstellung der vernetzbaren Siliconzusammensetzungen gemäß einem der Ansprüche 1 bis 10, **dadurch gekennzeichnet, dass** die Komponenten (A) bis (D) sowie gegebenenfalls (E) und (F) vermischt werden.

12. Verfahren zur Vulkanisation der vernetzbaren Siliconzusammensetzungen gemäß einem der Ansprüche 1 bis 10, **dadurch gekennzeichnet, dass** die Vernetzung durch Mikrowelleneinstrahlung erfolgt.

13. Verwendung der vernetzbaren Siliconzusammensetzungen gemäß einem der Ansprüche 1 bis 10 zur Herstellung von Extrudaten und Formkörpern.

14. Verwendung nach Anspruch 13, **dadurch gekennzeichnet, dass** Extrudate und Formkörper lebensmittelecht sind.

## Claims

1. Crosslinkable silicone compositions comprising:
(A) organopolysiloxanes having at least one organic radical having at least one aliphatic carbon-carbon multiple bond,
(B) from 0 to 100 parts by weight, based on 100 parts by weight of the organopolysiloxane (A), of treated or untreated active fillers, preferably fumed or precipitated silicas,
(C) treated or untreated or mixtures of treated or untreated microwave-active fillers comprising magnetite of the general formula Fe₃O₄, and
(D) a system suitable for crosslinking selected from the group of the noble-metal-complex-catalyzed addition crosslinking systems.

2. Crosslinkable silicone composition according to Claim 1, **characterized in that** it is a single-component composition.

3. Crosslinkable silicone compositions according to Claim 1 or 2, **characterized in that** at least one organopolysiloxane is selected from the group consisting of silicone block copolymers having urea segments, silicone block copolymers having amide segments and/or having imide segments and/or having ester-amide segments and/or having polystyrene segments and/or having silarylene segments and/or having carborane segments, and silicone graft copolymers having ether groups.

4. Crosslinkable silicone compositions according to Claim 1 or 2, **characterized in that** the organopolysiloxane is a vinyl-functional, substantially linear polydiorganosiloxane whose viscosity is from 0.01 to 500 000 Pa·s at 25°C.

5. Crosslinkable silicone compositions according to any of Claims 1 to 4, **characterized in that** the filler (B) is selected from the group consisting of fumed or precipitated silicas whose BET surface areas are at least 50 m²/g, carbon blacks, and activated charcoals.

6. Crosslinkable silicone compositions according to any of Claims 1 to 5, **characterized in that** the microwave-active fillers (C) comprise from 0.1 to 500 parts by weight, based on 100 parts by weight of component (A), of magnetite or mixtures comprising magnetite, if appropriate comprising other oxidic compounds of metals.

7. Crosslinkable silicone compositions according to any of Claims 1 to 6, **characterized in that** the average grain size of the microwave-active fillers (C) is from 0.1 to 1000 µm, within any desired grain size distribution.

8. Crosslinkable silicone compositions according to any of Claims 1 to 7, **characterized in that** the microwave-active fillers have been surface-treated with amines, with alcohols, or with silanes.

9. Crosslinkable silicone compositions according to any of Claims 1 to 8, **characterized in that** the crosslinkable silicone compositions comprise, as other constituents, additives (E) selected from the group consisting of non-active fillers, resin-like polyorganosiloxanes other than (A), dispersing agents, solvents, adhesion promoters, pigments, dyes, plasticizers, organic polymers, and heat stabilizers.

10. Crosslinkable silicone compositions according to any of Claims 1 to 9, **characterized in that** the crosslinkable silicone compositions comprise, as other constituents, auxiliaries (F) selected from the group consisting of inhibitors, catalysts, cocatalysts, crosslinking agents, hardeners, H-siloxanes, and hydroxysiloxanes.

11. Process for preparation of the crosslinkable silicone compositions according to any of Claims 1 to 10, **characterized in that** the components (A) to (D), and also, if appropriate, (E) and (F), are mixed.

12. Process for vulcanization of the crosslinkable silicone compositions according to any of Claims 1 to 10, **characterized in that** the crosslinking is carried out via microwave irradiation.

13. Use of the crosslinkable silicone compositions according to any of Claims 1 to 10 for production of extrudates and of moldings.

14. Use according to Claim 13, **characterized in that** extrudates and moldings are food-compatible.

## Revendications

1. Compositions de silicone réticulables contenant :
(A) des organopolysiloxanes comportant au moins un radical organique présentant au moins une liaison carbone - carbone multiple aliphatique,
(B) de 0 à 100 parties en poids, par rapport à 100 parties en poids de l'organopolysiloxane (A), de charges actives traitées ou non traitées, de préférence des acides siliciques pyrogènes ou précipités,
(C) des charges activables par micro-ondes, traitées ou non traitées, ou des mélanges de charges activables par micro-ondes, traitées ou non traitées, contenant de la magnétite de formule générale Fe₃O₄, et
(D) un système approprié à la réticulation, choisi dans le groupe des systèmes de réticulation par addition catalysée par complexe de métal noble.

2. Compositions de silicone réticulables suivant la revendication 1, **caractérisées en ce qu'**il s'agit de masses à un composant.

3. Compositions de silicone réticulables suivant la revendication 1 ou 2, **caractérisées en ce qu'**au moins un organopolysiloxane est choisi dans le groupe contenant des copolymères séquencés de silicone avec des segments urée, des copolymères séquencés de silicone avec des segments amide et / ou des segments imide et / ou des segments ester amide et / ou des segments polystyrène et / ou des segments silarylène et / ou des segments carborane, et des copolymères de silicone greffés par des groupes éther.

4. Compositions de silicone réticulables suivant la revendication 1 ou 2, **caractérisées en ce que** l'organopolysiloxane est un polydiorganosiloxane à fonctionnalité vinyle, essentiellement linéaire, d'une viscosité de 0,01 à 500 000 Pa.s à 25°C.

5. Compositions de silicone réticulables suivant l'une quelconque des revendications 1 à 4, **caractérisées en ce que** la charge (B) est choisie dans le groupe contenant des acides siliciques pyrogènes ou précipités d'une surface BET d'au moins 50 m²/g, des noirs de carbone et des charbons actifs.

6. Compositions de silicone réticulables suivant l'une quelconque des revendications 1 à 5, **caractérisées en ce que** l'on met en oeuvre en tant que charges activables par micro-ondes (C) de 0,1 à 500 fractions en poids, par rapport à 100 fractions en poids du composant (A), de magnétite ou de mélanges contenant de la magnétite, contenant le cas échéant d'autres composés oxydiques de métaux.

7. Compositions de silicone réticulables suivant l'une quelconque des revendications 1 à 6, **caractérisées en ce que** les charges activables par micro-ondes (C) présentent une granulométrie moyenne de 0,1 à 1000 µm, avec une distribution quelconque de la taille des grains.

8. Compositions de silicone réticulables suivant l'une quelconque des revendications 1 à 7, **caractérisées en ce que** les charges activables par micro-ondes (C) sont au préalable traitées en surface par des amines, des alcools ou des silanes.

9. Compositions de silicone réticulables suivant l'une quelconque des revendications 1 à 8, **caractérisées en ce que** les compositions de silicone réticulables contiennent en tant qu'autres constituants des additifs (E) choisis dans le groupe comprenant des charges inactives, des polyorganosiloxanes résiniques différents de (A), des adjuvants de dispersion, des solvants, des agents promoteurs d'adhérence, des pigments, des colorants, des plastifiants, des polymères organiques et des stabilisants à la chaleur.

10. Compositions de silicone réticulables suivant l'une quelconque des revendications 1 à 9, **caractérisées en ce que** les compositions de silicone réticulables contiennent en tant qu'autres constituants des adjuvants (F) choisis dans le groupe comprenant des inhibiteurs, des catalyseurs, des cocatalyseurs, des réticulants, des durcisseurs, des H-siloxanes et des hydroxysiloxanes.

11. Procédé de préparation des compositions de silicone réticulables suivant l'une quelconque des revendications 1 à 10, **caractérisé en ce que** l'on mélange les composants (A) à (D) et le cas échéant (E) et (F).

12. Procédé de vulcanisation des compositions de silicone réticulables suivant l'une quelconque des revendications 1 à 10, **caractérisé en ce que** la réticulation se fait par irradiation par micro-ondes.

13. Utilisation des compositions de silicone réticulables suivant l'une quelconque des revendications 1 à 10 pour la préparation de produits extrudés et d'articles moulés.

14. Utilisation suivant la revendication 13, **caractérisée en ce que** les produits extrudés et les articles moulés conviennent pour des denrées alimentaires.
